# EUROPÄISCHE PATENTANMELDUNG

(11) **EP 0 898 868 A1**
(43) Veröffentlichungstag der Anmeldung: **03.03.1999**
(21) Anmeldenummer: 97114647.7
(22) Anmeldetag: 23.08.1997
(51) Int. Cl.: A01C 23/02

(54) **Vorrichtung zur Bodenbearbeitung**

(71) Anmelder: Zunhammer, Sebastian, 83301 Traunreut (DE)
(72) Erfinder: Zunhammer, Sebastian, 83301 Traunreut (DE)

(57) **Zusammenfassung**

Die erfindungsgemäße Bodenbearbeitungsvorrichtung ist gemäß Figur 1 mit einem Träger für Bodenbearbeitungsgeräte zur Gülle-Ausbringung versehen, bei dem der Träger als Querträger ausgebildet ist, an welchem wenigstens ein Längsträger angeordnet ist, so daß Gülle-Ausbringeinheiten (1) unterschiedlichster Bauart an dein Querträger (4) oder den Längsträgern (5) montierbar sind.

## Beschreibung

Die Erfindung bezieht sich auf eine Vorrichtung zur Bodenbearbeitung, insbesondere auf ein Bodenbearbeitungsgerät zur Einarbeitung von Gülle in möglichst geringer Tiefe im Erdreich.

Zur Einarbeitung von Gülle in den Oberflächenbereich eines Ackers sind bereits Verfahren und Bodenbearbeitungsgeräte bekannt. In der 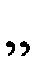 dlz", 11/89, Seiten 122 und 123 ist beschrieben, daß Gülle auf die Oberfläche des Ackerbodens aufgebracht und mittels einer nachlaufenden Scheibenegge in den Boden eingearbeitet werden kann. Derartige Bodenbearbeitungsgeräte sind in verschiedenen Arbeitsbreiten einsetzbar und erfordern je nach Arbeitsbreite einen mehr oder weniger hohen Kraftaufwand beim Einarbeiten der Gülle in den Ackerboden. Die dort beschriebene Scheibenegge hat eine Arbeitsbreite von vier Metern.

Der Aufwand für die Einbringung der Gülle ist also von entscheidender Bedeutung tur die Geräteschaften, mit welchen das Erdreich bearbeitet und die Gülle gegebenenfalls eingebracht werden muß. Der Ackerboden, bzw. das Erdreich, in weiches die Gülle eingebracht wird, ist auch von der Jahreszeit her unterschiedlich und die Einbringung ist durch den Bewuchs bestimmt.

Eine grobe Unterscheidung wird durch die jahreszeitlich bedingte Nutzung erklärbar. Im allgemeinen werden die erfindungsgemäßen Bodenbearbeitungsgeräte als 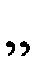 Drillgeräte" bezeichnet. So sind unter dieser Kategorie Schlitzgeräte für alle Arten von Erdreich zu verstehen, ferner sind aus der Praxis sogenannte Hohlscheibengeräte bekannt, mit denen das Erdreich verwirbelt wird und schließlich sind auch die sogenannten Grubber bekannt, mit denen das Erdreich aufgerissen wird. Die Einbringung der Gülle kann dabei auf die unterschiedlichste Art und Weise vorgenommen werden.

Der Anwender muß demgemäß eine Vielzahl von Geräten anschaffen, wenn er zu jeder Jahreszeit den Boden bearbeiten und gegebenenfalls die bei ihm anfallende Gülle optimal ausbringen will.

Dies zu vermeiden ist Aufgabe der Erfindung. Mit einer Vorrichtung gemäß der Erfindung soll der Anwender bei minimalem Geräteeinsatz in der Lage sein, sämtliche Arten von Ackerböden bzw. Erdreich entsprechend der Jahreszeit, dem Bewuchs und gegebenenfalls seinem Gülleaufkommen zu bearbeiten.

Diese Aufgabe wird mit einer Vorrichtung gemäß Anspruch 1 gelöst. Die erfindungsgemäße Vorrichtung wird den abhängigen Ansprüchen entsprechend ausgestaltet.

Anhand der Zeichnungen wird die Erfindung nebst ihrer vorteilhaften Ausführungsbeispiele noch näher erläutert.

Es zeigt:
- Figur 1: ein Bodenbearbeitungsgerät mit Schlepper und Verschlauchung schematisch dargestellt;
- Figur 2: ein Bodenbearbeitungsgerät mit Schlepper und Gülleanhänger;
- Figur 3: ein Bodenbearbeitungsgerät als Selbstfahrer mit Güllefaß;
- Figur 4a: ein Bodenbearbeitungsgerät in Seitenansicht;
- Figur 4b: eine Draufsicht auf das Gerät gemäß Figur 4a;
- Figur 5a: eine Variante eines Bodenbearbeitungsgerätes in Seitenansicht;
- Figur 5b: eine Draufsicht der Variante aus Figur 5a;
- Figur 6a: eine weitere Variante des Bodenbearbeitungsgerätes in Seitenansicht;
- Figur 6b: eine Draufsicht der Variante aus Figur 6a;
- Figur 7a: eine weitere Variante des Bodenbearbeitungsgerätes in Seitenansicht;
- Figur 7b: eine Draufsicht auf die Variante aus Figur 7a und
- Figur 8: eine Prinzipskizze eines Bodenbearbeitungsgerätes in Arbeits-und angedeuteter Transportstellung.

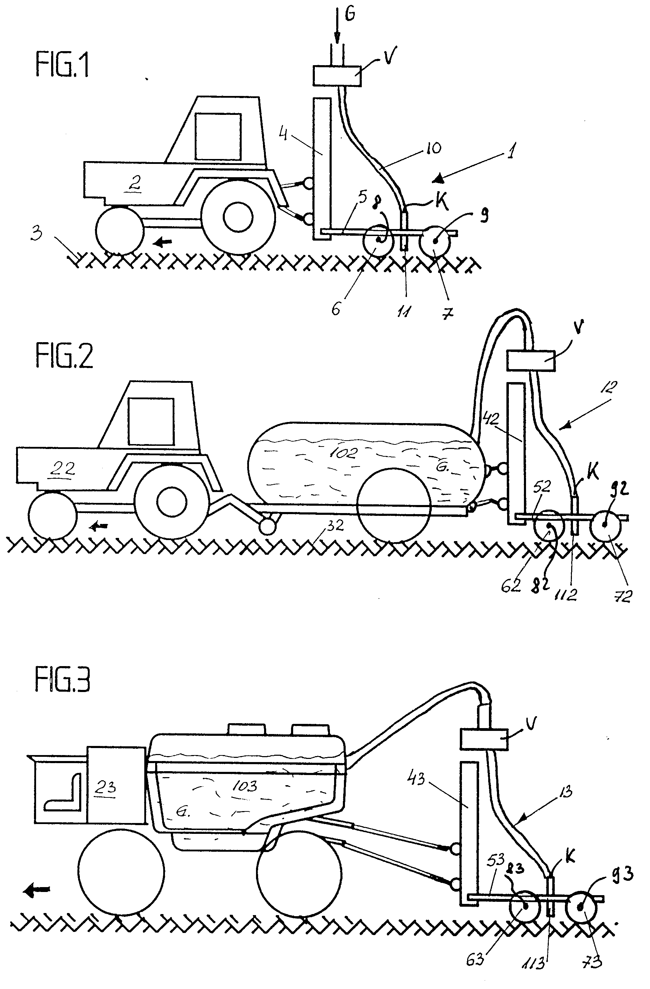

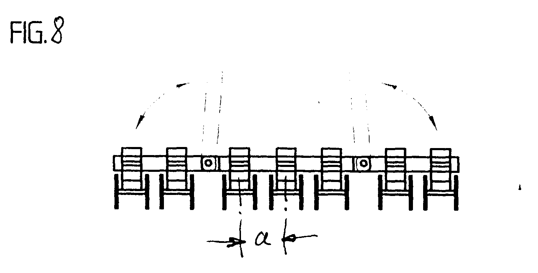

Ein in Figur 1 schematisch dargestelltes Bodenbearbeitungsgerät 1 wird von einem Schlepper 2 über zu bearbeitendes Erdreich 3 gezogen. Das Bodenbearbeitungsgerät 1 weist einen Querträger 4 auf, an welchem sich ein oder mehrere Längsträger 5 befinden, die quer zur Fahrtrichtung in einem Abstand a voneinander beabstandet sind, was aus Figur 8 ersichtlich ist. Dieser gegenseitige Abstand a kann einstellbar sein, wobei dieser Abstand a stufenlos oder aber in einem vorab festgelegten Raster einstellbar ist, was nicht näher erläutert werden muß. Am Längsträger 5 befinden sich jeweils zwei Hohlscheiben 6 und 7, die den Längsträger 5 zwischen sich aufnehmen, wobei die konvex gewölbten Oberflächen der Hohlscheiben 6 und 7 vom Längsträger 5 wegweisen. An der konkav gewölbten Oberfläche der schüsselförmigen Hohlscheiben 6 und 7 weisen diese jeweils Lager 8 und 9 auf, mit denen sie drehbar ain Längsträger 5 so befestigt sind, daß sie zu diesem einen spitzen Winkel einschließen. Zwischen den Hohlscheiben 6 und 7 befindet sich ein Auslaufstutzen 11 für Gülle G, der mit Hilfe eines Schlauches 10 mit einem nicht dargestellten Güllebehälter verbunden ist. Die hier gezeigte Art der Gülleausbringung erfolgt also über eine sogenannte Verschlauchung.

In Figur 2 ist ein Ausführungsbeispiel dargestellt, bei welchem ein Gülleanhänger 102 an einen Schlepper 22 angekoppelt ist, und von diesem über einen Ackerboden 32 gezogen wird. Der Anhänger 102 weist an seinem vom Schlepper 22 abgewandten Ende ein Bodenbearbeitungsgerät 12 auf, welches in seinem Aufbau dem aus Figur 1 entspricht. Die relevanten Elemente sind jeweils sinngemäß mit dein gleichen Bezugszeichen versehen, wobei ihnen jedoch zur Unterscheidung die Figurenbezifferung als Index angehängt ist.

In Figur 3 ist ein sogenannter Selbstfahrer 23 gezeigt, welcher das Güllefahrzeug darstellt. Der Selbstfahrer 23 trägt ein Güllefaß 103, aus welchem Gülle G auf den Ackerboden 33 ausgebracht wird, was später noch näher erläutert werden wird. Dein Selbstfahrer 23 ist ein Bodenbearbeitungsgerät 13 angehängt, welches prinzipiell dein aus den vorbeschriebenen Ausführungsbeispielen entspricht.

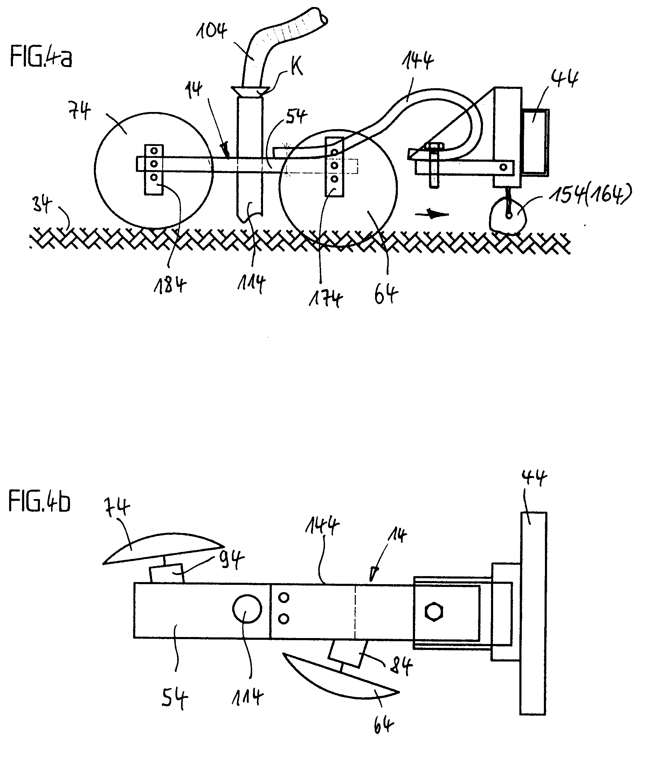

Figur 4a zeigt ein Bodenbearbeitungsgerät 14 gemäß Figur 1 in vergrößerter Seitenansicht, bzw. dessen relevanten Abschnitt, soweit er für die vorliegende Erfindung von Bedeutung ist. Der Querträger 44 ist geschnitten dargestellt und es ist an diesem ein Längsträger 54 montiert, der so mit dem Querträger 44 verbunden ist, daß er senkrecht zur Oberfläche des Ackerbodens 34 schwerkbar ist. Diese Verschwenkbarkeit des Längsträgers 54 ermöglicht diesem, Steinen oder dergleichen an der Oberfläche des Ackerboden 3 auszuweichen, so daß der Schlepperfahrer Bodenunebenheiten, Steine und andere auf dem Ackerboden 3 befindliche Gegenstände nicht beachten muß. Eine Feder 144 oder ein gleichartig wirkendes Element hält dabei den Längsträger 54 in Bodenkontakt, wobei bevorzugt mehrere Längsträger 54 nebeneinander vorgesehen sind. Diese Art der Aufhängung mittels Feder 144 bewirkt, daß die Längsträger 54 feder-, dreh- und/oder verdrehelastisch mit dein zugeordneten Querträger 44 verbunden sind. Durch diese Maßnahme werden die Hohlscheiben 64 und 74 auch bei Kurvenfahrten nicht beschädigt.

Die Längsträger 54 verlaufen - wie aus Figur 4b ersichtlich ist - parallel zur Fahrtrichtung, so daß die Hohlscheiben 64 und 74 aufgrund der schrägen Anbringung ihrer Lager 84 und 94 am Längsträger 54 auch zur Fahrtrichtung einen spitzen Winkel einschließen. Die Höhe der Längsträger 54, die am Querträger 44 in der beschriebenen Weise gelenkig angeflanscht sind, wird beispielsweise durch Höhenräder 154 und 164 bestimmt, welche am Querträger 44 befestigt sind und dessen Abstand zur Oberfläche des Erdreiches 34 festlegen. Der Abstand des Querträgers 44 zur Oberfläche des Erdreiches 34 ist so eingestellt, daß die in Fahrtrichtung betrachtet erste Hohlscheibe 64 geringfügig in den Ackerboden 34 eindringt, wobei die in Fahrtrichtung gesehen zweite Hohlscheibe 74 geringfügig oberhalb des den Ackerboden bildenden Erdreiches 34 angeordnet ist, bzw. diesen gerade tangiert. Eine weitere Möglichkeit, die Arbeitshöhe der Hohlscheiben 64 und 74 einzustellen besteht darin, sie am Längsträger 54 höhenverstellbar zu befestigen. Diese Höhenverstellung kann durch Verstellaschen 174, 184 erfolgen, die in Figur 4a angedeutet sind und sich etwa im Zentrum der jeweiligen Hohlscheiben 64, 74 befinden. Beide Möglichkeiten zur Höheneinstellung können beliebig kombiniert werden.

Beim Schleppen des Bodenbearbeitungsgerätes 14 über den Ackerboden 34 arbeitet die erste Hohlscheibe 64 nach Art eines Rollspatenmessers und gräbt den Ackerboden 34 durch seine rotierende Bewegung, der die Schleppbewegung in Fahrtrichtung des Schleppers 2 überlagert wird, schneidend auf. Dabei bekommt der aufgebrochene Ackerboden 34 einen gewissen Drall, wird gegen die zweite Hohlscheibe 74 geschleudert und durch deren rotierende Bewegung wieder auf die Oberfläche des Ackerbodens 34 geworfen. Die Rotation der zweiten Hohlscheibe 74 wird in gleicher Weise der Schleppbewegung des Schleppers 2 in Fahrtrichtung überlagert, so daß mittels der zweiten Hohlscheibe 74 der Ackerboden 34 wieder eingeebnet wird.

Zwischen den beiden Hohlscheiben 64 und 74 befindet sich ein Auslaufstutzen 114 der mittels einer Leitung 104 mit einem Güllevorratsbehälter verbunden ist. Dieser Güllevorratsbehälter ist in Figur 1 nicht dargestellt (Verschlauchung); in den Ausführungsbeispielen gemäß der Figuren 2 und 3 ist er mit dein Bezugszeichen 102 und 103 gekennzeichnet. Aufgrund eines entsprechenden Ansteuerbefehles wird während des Schleppens Gülle G über den Auslaufstutzen 114 ausgebracht. Da sich der Auslaufstutzen 114 zwischen den Hohlscheiben 64 und 74 befindet, läuft die Gülle G in die von der ersten Hohlscheibe 64 aufgeschnittene Furche im Ackerboden 34, welche anschließend von der zweiten Hohlscheibe 74 sofort wieder geschlossen wird.

Bei diesem Vorgang wird die Gülle G in optimaler Weise mit der aufgewirbelten Erde vermischt und in den Ackerboden 34 eingearbeitet. Es kann kaum Geruchsbelästigung entstehen, weil die Gülle G nicht verdunsten kann; ebenso gehen keine wertvollen Güllebestandteile als Dünger verloren, sondern die gesamten Nährstoffe der Gülle G bleiben dem Ackerboden 34 erhalten und die Umwelt wird nicht durch unangenehme Gerüche belästigt.

Da die Hohlscheiben 64 und 74 beim Schleppen rotieren, ist der Kraftaufwand zum Aufbrechen der Ackeroberfläche gering.

Eine in Figur 4b dargestellte Draufsicht zeigt das Bodenbearbeitungsgerät 14. In dieser Ansicht ist ein Abschnitt des Querträgers 44 erkennbar, an welchem einer von mehreren Längsträgern 54 mittels jeweils einem Gelenk 144 gemäß dein Ausführungsbeispiel nach Figur 4a befestigt sind. In Richtung der Längserstreckung der Längsträger 54 sind hintereinander zwei Lager 84, 94 angebracht, die von der Gelenkseite her gesehen einen stumpfen Winkel mit der Längsachse des Längsträgers 54 bilden. An den freien Enden der Lager 84, 94 sind die Hohlscheiben 64, 74 drehbar befestigt. Ihre konkave Oberfläche ist dabei jeweils dem zugehörigen Längsträger 54 zugewandt, den sie weitestgehend zentrisch zwischen sich aufnehmen. In Längsrichtung des Längsträgers 54 ist jeweils zwischen den beiden Hohlscheiben 64, 74 ein Auslaufstutzen 114 für Gülle vorgesehen, der mit einem Vorratsbehälter für Gülle verbunden ist, was aber hier nicht ausdrücklich dargestellt ist, da es aus den anderen Ansichten deutlich wird.

Praktische Versuche haben gezeigt, daß bei gleicher Schlepperleistung ein Bodenbearbeitungsgerät 1, 12,13,14 der beschriebenen Art mit doppelter Breite und doppelter Geschwindigkeit als beim Stand der Technik gefahren werden kann. Die Arbeitsleistung ist also vervierfacht, wobei das umweltfreundliche Einbringen der Gülle G und die geringere mechanische Beanspruchung der in den Ackerboden 3 eingreifenden Elemente 6xx und 7xx durch deren Rotation noch von besonderem Vorteil sind.

Die Art der Aufhängung des Bodenbearbeitungsgerätes am Grundträger ermöglicht auf einfache Weise auch dessen Austausch gegen ein anderes Bodenbearbeitungsgerät, wie nachstehend noch näher beschrieben wird

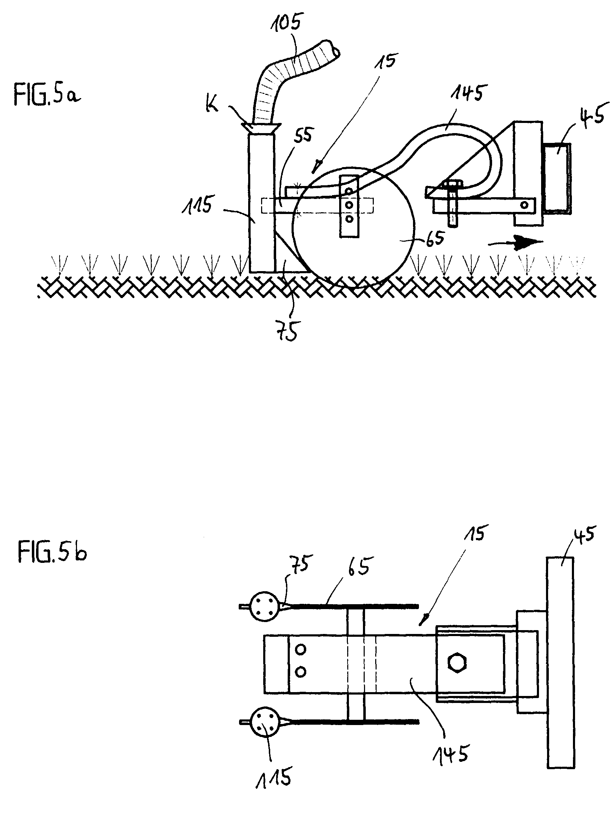

In Figur 5a ist eine Variante der vorbeschriebenen Vorrichtung gezeigt, die ein anderes Ausführungsbeispiel eines Bodenbearbeitungsgerätes zu der vorliegenden Erfindung darstellt. Zur besseren Übersicht sind gleichartige Bauelemente mit gleichen Grund-Bezugszeichen versehen, denen jeweils der entsprechende Figuren-Index beigestellt ist. Der gravierende Unterschied zum Ausführungsbeispiel gemäß Figur 4a/4b ist in der Ausgestaltung des Drillgerätes 15 zu sehen. An den Längsträgern 55 ist - in Fahrtrichtung betrachtet - wenigstens eine Schlitzscheibe 65 angeordnet. Mit Hilfe von nachgeordneten Spreizmeißeln 75 wird die von den Schlitzscheiben 65 geschnittene Furche geweitet und durch eine Dungdüse in Form einer Flachstrahl-Düse 115 wird die Gülle in das Erdreich eingebracht. Das hier als Gülle-Ausbringeinheit dargestellte Drillgerät 15 kann am Querträger 45 derart angelenkt sein, daß eine Parallelogramm-Aufhängung als Gelenk gebildet wird. Die Parallelogramm-Aufhängung ist bevorzugt federbelastet, so daß gewährleistet ist, daß die Längsträger 55 mit der Gülleausbringeinheit immer parallel zur Oberfläche des Erdreiches 35 verlaufen. Diese Art der Aufhängung mittels Feder 145 bewirkt, daß die Längsträger 55 feder-, dreh- und/oder verdrehelastisch mit dem zugeordneten Querträger 45 verbunden sind. Durch diese Maßnahme werden die Schlitzscheiben 65 und die ihnen nachgeordneten Spreizmeißel 75 sowie die Flachstrahldüsen 115 auch bei Kurvenfahrten nicht beschädigt.

Die höhenmäßige Lagezuordnung der Längsträger 55 zur Oberfläche des Erdreiches 35 wird wiederum ausschließlich durch die Höhenverstellung festgelegt, wie es sinngemäß zum Ausführungsbeispiel gemäß Figur 4a/4b weiter oben bereits beschrieben ist.

Die vorbeschriebenen Einzelheiten gelten sinngemäß in gleicher Weise für die erfindungsgemäße Ausführungsform gemäß Figur 4a/4b, wobei auch hier die Austauschbarkeit des jeweiligen Bodenbearbeitungsgerätes 1xx im Vordergrund steht.

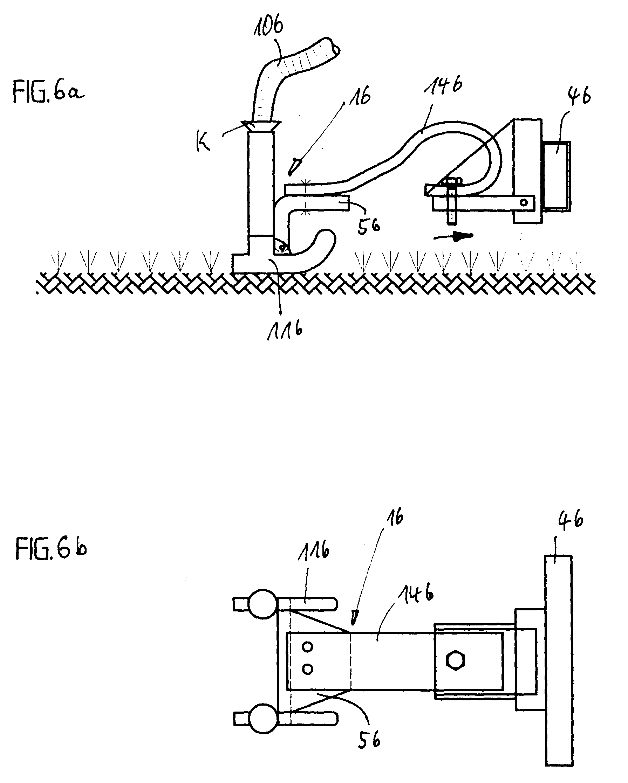

Figur 6a stellt eine weitere Variante des Bodenbearbeitungsgerätes dar. Anstelle der vorbeschriebenen Geräte 1 bis 15 sind am Längsträger 56 mittels Blattfedern 146 über einen Ausleger 46 Gleitschuhe als Dungspendedüsen 116 vorgesehen, die eine weitere Gülle-Ausbringeinheit 16 in einer anderen Ausführungsform darstellen. In Figur 6b ist die Draufsicht auf dieses Ausführungsbeispiel dargstellt, wobei die relevanten Elemente mit den gleichen Bezugszeichen versehen sind.

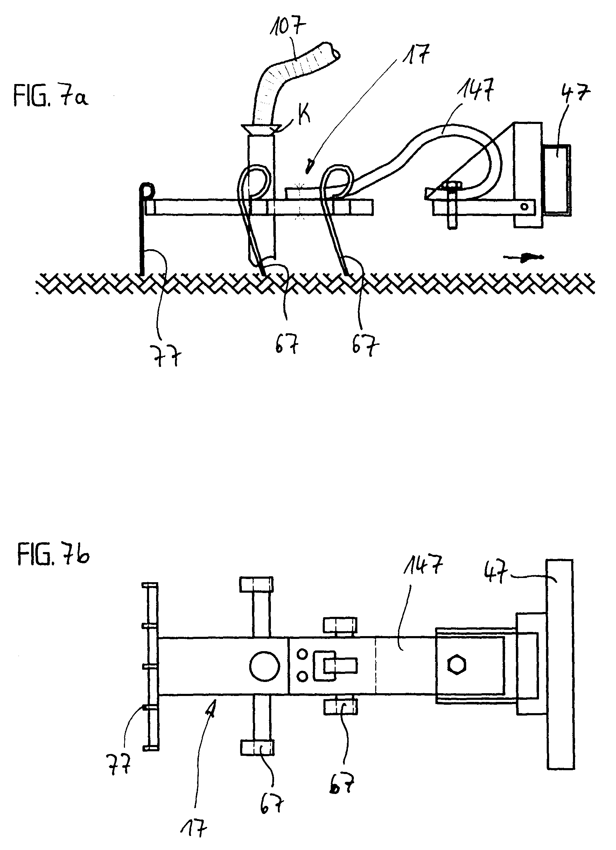

In Figur 7a ist darüber hinaus eine weitere Ausführungsform einer Gülle-Ausbringeinheit gezeigt, deren Draufsicht in Figur 7b dargestellt ist. An der Grundvorrichtung, die durch den Querträger 47, aber auch durch dessen Ergänzung mit einer Blattfeder 147 gebildet wird, ist eine Drillvorrichtung 17 montiert, die Bodenbearbeitungszinken 67, 77 schwerer bis leichter Bauart trägt. Darunter sind jegliche Art von Ackerzinken zu verstehen, als Beispiele seien Grubberzinken, Kultureggenzinken und Striegelzinken genannt.

Die erfindungsgemäße Austauschbarkeit der unterschiedlichsten Drillgeräte bzw. Gülle-Ansbringeinheiten an einem universalen Grundgerät ermöglicht dem Anwender zu jeder Jahreszeit eine individuelle Bodenbearbeitung mittels einem Grundgerät und den daran montierbaren Wechselanbauten.

In Figur 8 ist schließlich sehr schematisiert eine Rückansicht des erfindungsgemäßen Bodenbearbeitungsgerätes gezeigt, durch welche lediglich dokumentiert werden soll, daß das Bodenbearbeitungsgerät gemäß der Erfindung für den unumgänglichen Transportfall auf öffentlichen Straßen und Wegen auch auf die zulässige Breite geklappt werden kann, was prinzipiell aus der Technik der landwirtschaftlichen Fahrzeuge bereits bekannt ist.

## Patentansprüche

1. Bodenbearbeitungsvorrichtung mit einem Träger für Bodenbearbeitungsgeräte zur Gülle-Ausbringung, bei dem der Träger als Querträger ausgebildet ist, an welchem wenigstens ein Längsträger angeordnet ist, **dadurch gekennzeichnet**, daß Gülle-Ausbringeinheiten (1, 12, 13, 14, 15, 16, 17) unterschiedlichster Bauart an dem Querträger (4, 42, 43, 44, 45, 46, 47) oder den Längsträgem (5, 52, 53, 54, 55, 56, 57) wechselbar anbaubar sind.

2. Vorrichtung nach Anspruch 1, **dadurch gekennzeichnet** , daß die Gülle-Ausbringeinheiten (1, 12, 13, 14, 15, 16, 17) eingangsseitig über einen Verteiler (V) mittels einer Kupplung (K) mit einem Gülle-Vorratsbehälter (102, 103) verbunden sind.

3. Vorrichtung nach Anspruch 2, **dadurch gekennzeichnet,** daß die Kupplung (K) als Schnellkupplung ausgebildet ist.

4. Vorrichtung nach Anspruch 1, **dadurch gekennzeichnet**, daß die Längsträger (5) am Querträger (4) mittels Lagerungen (8, 9) derart angelenkt sind, daß sie senkrecht zur Oberfläche des Ackerbodens (3) auslenkbar sind.

5. Vorrichtung nach Anspruch 4, **dadurch gekennzeichnet**, daß die Lagerungen als Gelenke in Form von Parallelogramm-Aufhängungen ausgebildet sind.

6. Vorrichtung nach Anspruch 4, **dadurch gekennzeichnet**, daß die Lagerung (145) feder-, dreh- und /oder verdrehelastisch ausgebildet ist.

7. Vorrichtung nach Anspruch 4, **dadurch gekennzeichnet**, daß die Lagerung als Blattfeder (145) ausgebildet ist.

8. Vorrichtung nach Anspruch 1, **dadurch gekennzeichnet**, daß die Längsträger (5) am Querträger (4) quer zur Bearbeitungsrichtung verschiebbar sind, wobei diese Verschiebung in festen Rasterschritten mit dem Rastermaß (a) oder stufenlos erfolgen kann.

9. Vorrichtung nach Anspruch 1, **dadurch gekennzeichnet**, , daß die Gülle-Ausbringeinheit als Hohlscheibeninjektor (14) ausgebildet ist.

10. Vorrichtung nach Anspruch 1, **dadurch gekennzeichnet**, , daß die Gülle-Ausbringeinheit als Schlitzscheibeninjektor (15) ausgebildet ist.

11. Vorrichtung nach Anspruch 1, **dadurch gekennzeichnet**, , daß die Gülle-Ausbringeinheit als Gleitkufeninjektor (16) ausgebildet ist.

12. Vorrichtung nach Anspruch 1, **dadurch gekennzeichnet**, , daß die Gülle-Ausbringeinheit als Zinkeninjektor (17) ausgebildet ist
